# EUROPÄISCHE PATENTSCHRIFT

(11) **EP 2 183 514 B1**
(45) Veröffentlichungstag und Bekanntmachung des Hinweises auf die Patenterteilung: **15.03.2017**
(21) Anmeldenummer: 08774761.4
(22) Anmeldetag: 04.07.2008
(51) Int. Cl.: F16K 99/00

(54) **MIKROVENTIL, VERFAHREN ZUM HERSTELLEN EINES MIKROVENTILS SOWIE MIKROPUMPE**
MICRO VALVE, METHOD FOR THE PRODUCTION OF A MICRO VALVE AND MICRO PUMP
MICRO-VALVE, PROCÉDÉ DE FABRICATION D'UNE MICRO-VALVE ET UNE MICRO-POMPE

(30) Priorität: 30.07.2007 DE 102007035721
(43) Veröffentlichungstag der Anmeldung: 12.05.2010
(73) Patentinhaber: Robert Bosch GmbH, 70442 Stuttgart (DE)
(72) Erfinder: PIRK, Tjalf, 71229 Leonberg (DE); STUMBER, Michael, 70825 Korntal-Muenchingen (DE)
(86) Internationale Anmeldenummer: PCT/EP2008/058649
(87) Internationale Veröffentlichungsnummer: WO 2009/015983

(56) Entgegenhaltungen:
- WO-A-2007/004105
- DE-A1- 4 422 944
- DE-A1- 10 334 240
- VAN DER WIJNGAART W ET AL: "A high-stroke, high-pressure electrostatic actuator for valve applications" SENSORS AND ACTUATORS A, ELSEVIER SEQUOIA S.A., LAUSANNE, CH, Bd. 100, Nr. 2-3, 1. September 2002 (2002-09-01), Seiten 264-271, XP004374984 ISSN: 0924-4247
- ZENGERLE R: "STAND DER TECHNIK BEI MIKROFLUIDISCHEN AKTOREN" F & M FEINWERKTECHNIK MIKROTECHNIK MIKROELEKTRONIK, HANSER, MUNCHEN, DE, Bd. 104, Nr. 4, 1. April 1996 (1996-04-01), Seiten 241-244,246, XP000591938 ISSN: 1437-9503

## Beschreibung

### Stand der Technik

Die Erfindung betrifft ein Mikroventil gemäß dem Oberbegriff des Anspruchs 1sowie eine Mikropumpe gemäß Anspruch 8.

In der Mikrofluidik, die neue Anwendungen, beispielsweise in der Pharmazeutik, Medizin oder Verfahrenstechnik, ermöglicht, sind Elemente zum Transport und zur Steuerung der Fluide von grundlegender Bedeutung. Bisher ist es üblich, die insbesondere in Mikropumpen zum Einsatz kommenden Mikroventile nach dem Zweikammerprinzip auszubilden, wobei zwischen zwei Ventilkammern ein Schließglied angeordnet ist, das nur bei einer bestimmten Druckkonfiguration in Abhängigkeit der Druckdifferenz zwischen beiden Ventilkammern öffnet. Ein derartiges Zweikammer-Mikroventil ist in der DE 103 34 240 A1 beschrieben. Nachteilig bei dem bekannten Mikroventil ist es, dass dieses ausschließlich in Abhängigkeit der Druckdifferenz zwischen beiden Ventilkammern schaltet. Das bekannte Mikroventil ist zwar vergleichsweise einfach fertigbar - dennoch bestehen Bestrebungen, noch einfacher fertigbare Mikroventile, insbesondere mit einer erweiterten Funktionalität zu entwickeln.

Aus WO 2007/004105 A1 und DE 103 34 240 A1 sind Mikroventile für Mikropumpen bekannt. Van der Wijngaart et al und Roland Zengerle beschreiben mikrophysische Aktoren für mikrophysische Systeme.

### Offenbarung der Erfindung

### Technische Aufgabe

Der Erfindung liegt daher die Aufgabe zugrunde, ein Mikroventil mit einer erweiterten Funktionalität vorzuschlagen, welches auf einfache Weise fertigbar ist. Ferner besteht die Aufgabe darin, ein geeignetes Herstellungsverfahren sowie eine Mikropumpe mit einem derartigen Mikroventil vorzuschlagen.

### Technische Lösung

Diese Aufgabe wird hinsichtlich des Mikroventils mit den Merkmalen des Anspruchs 1, hinsichtlich des Herstellungsverfahrens mit den Merkmalen des Anspruchs 10 und hinsichtlich der Mikropumpe mit den Merkmalen des Anspruchs 13 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmalen.

Der Erfindung liegt der Gedanke zugrunde, dem Aufbau des Mikroventils anstelle eines Zweikammerprinzips mindestens ein Dreikammerprinzip zugrunde zu legen, wobei zusätzlich zu den beiden Ventilkammern, zwischen denen ein Fluidaustausch stattfinden kann, eine Referenzkammer vorgesehen ist, die zumindest abschnittsweise von dem Schließglied oder einem mit dem Schließglied verbundenen Strukturabschnitt begrenzt ist. Dabei kann durch die Wahl des Fluiddruckes (Gas oder Flüssigkeit) in der Referenzkammer, also des Referenzdruckes, das Schaltverhalten des erfindungsgemäßen Mikroventils beeinflusst werden. Insbesondere ist durch die Wahl des Referenzdruckes der Auslösedruck (Arbeitspunkt) wählbar, ab dessen Überschreiten das Mikroventil öffnet. Von entscheidendem Vorteil ist es, dass das nach dem Konzept der Erfindung ausgebildete Mikroventil im Wesentlichen nicht in Abhängigkeit der Druckdifferenz zwischen den beiden Ventilkammern arbeitet, sondern in Abhängigkeit der Druckdifferenz zwischen zumindest einer der Ventilkammern und der Referenzkammer. Ein nach dem Konzept der Erfindung ausgebildetes Mikroventil kann in einer einfachsten Ausführungsform derart ausgebildet werden, dass es unabhängig davon, in welcher der beiden Ventilkammern der Referenzdruck in der Referenzkammer überschritten wird, öffnet. Das Mikroventil schaltet bzw. arbeitet, anders ausgedrückt, in einer einfachsten Ausführungsform in beide Richtungen. Bei Unterdruck bleibt das Ventil hingegen bevorzugt geschlossen, wodurch der Gleichrichtereffekt erreicht wird.

Das erfindungsgemäße Mikroventil lässt sich auf einfache Weise mit im Wesentlichen nur zwei Platten herstellen, wobei die beiden Platten, von denen zumindest eine zuvor strukturiert wurde, aneinandergefügt werden. Beispielsweise ist es möglich, eine Grundplatte mit den beiden Ventilkammern durch Heißprägen oder Spritzgießen herzustellen, woraufhin eine beispielsweise ebenfalls heißgeprägte oder spritzgegossene, das Schließglied aufweisende Funktionsschicht mit der Grundplatte gefügt wird. Für diese Art der Fertigung werden als Material für die Grundplatte und/oder die Funktionsschicht bevorzugt Polymere eingesetzt.

Für Anwendungsbereiche, in denen eine größere Genauigkeit und eine höhere Reproduzierbarkeit notwendig ist, kann zumindest eine der Platten, also die Grundplatte oder die Funktionsschicht, mit präziseren Methoden der Mikromechanik in Halbleitermaterial, beispielsweise Silizium oder Siliziumoxid, gefertigt werden. Insbesondere kann zumindest eine der Platten im Trench-Ätzverfahren produziert werden. Dabei liegt es im Rahmen der Erfindung, die Grundplatte beispielsweise aus Silizium oder Siliziumoxid und die Funktionsschicht aus insbesondere dotiertem Quarzglas, beispielsweise Borosilikatglas, zu fertigen und die beiden Platten, beispielsweise durch anodisches Bonden aneinander festzulegen, wobei bei einem derartigen Fügeverfahren darauf zu achten ist, dass im Dichtbereich des Mikroventils, also in dem Bereich, in dem das insbesondere als Membran ausgebildete Schließglied mit der Grundplatte, insbesondere mit der Stirnseite einer Trennwand der Grundplatte, zusammenwirkt, eine Antibondschicht vorgesehen wird.

Es liegt im Rahmen der Erfindung, zunächst die Grundplatte und die Funktionsschicht getrennt voneinander zu strukturieren und darauffolgend zu fügen, oder aber zunächst die Grundplatte zu strukturieren, daraufhin die Funktionsschicht mit der Grundplatte zu fügen und die an der Grundplatte festgelegte Funktionsschicht nachfolgend, beispielsweise durch Trench-Ätzen, zu strukturieren.

Das nach dem Konzept der Erfindung ausgebildete Mikroventil weist durch das Vorsehen der zusätzlichen Referenzkammer nicht nur eine erhöhte Funktionalität auf, sondern ist auch besonders einfach und damit kostengünstig herzustellen, insbesondere dann, wenn zumindest eine der Platten des Mikroventils aus Silizium oder Siliziumoxid hergestellt ist.

Es liegt im Rahmen der Erfindung, dass es sich bei der Referenzkammer um eine mit einem Fluid gefüllte, allseitig geschlossene Kammer handelt und somit der Fluiddruck in der Referenzkammer nicht aktiv beeinflussbar ist. Ebenso ist es denkbar, die Referenzkammer mit der Umgebung, insbesondere der Atmosphäre, zu verbinden, so dass der Referenzdruck mit dem Umgebungsdruck, insbesondere dem Atmosphärendruck, übereinstimmt. Bevorzugt ist eine Ausführungsform, bei der aktiv auf den Fluiddruck in der Referenzkammer Einfluss genommen werden kann, der Auslösedruck des Mikroventils also, insbesondere in Abhängigkeit der Schaltaufgaben oder Betriebssituation, vorzugsweise während des Betriebs des Mikroventils variierbar ist. Dies kann beispielsweise dadurch realisiert werden, dass das Volumen der Referenzkammer, beispielsweise durch äußere Druck- oder Vakuumbeaufschlagung, veränderbar ist, oder in dem die Referenzkammer mit unter Druck stehendem Fluid gefüllt, oder Fluid aus dieser abgesaugt wird. Denkbar ist auch die Modifizierung des Druckes durch die Änderung zusammenhängender Parameter wie beispielsweise Phase oder Temperatur des eingeschlossenen Fluids.

Insbesondere für den Anwendungsfall, bei dem das Mikroventil, wie herkömmliche Ventile, ausschließlich in Abhängigkeit der Druckdifferenz zwischen der ersten und der zweiten Ventilkammer schalten soll, ist eine Ausführungsform von Vorteil, bei der die Referenzkammer mit der ersten oder der zweiten Ventilkammer verbunden ist.

Erfindungsgemäß ist das Schließglied als Membran ausgebildet, die eine Umfangswand bzw. einen Umfangswandabschnitt der Referenzkammer bildet. Die insbesondere flächige Membran wirkt in ihrer Schließstellung dichtend mit einer zwischen der ersten und der zweiten Ventilkammer angeordneten Trennwand zusammen, vorzugsweise mit der in Richtung der Membran weisenden Stirnseite dieser Trennwand. Dabei ist die Trennwand bevorzugt in der Grundplatte angeordnet, in der auch die beiden Ventilkammern vorgesehen sind. Beispielsweise kann die Trennwand hergestellt werden, indem der später die Trennwand bildende Bereich beim Ätzen der Ventilkammern mit einer Ätzmaske geschützt ist. Es liegt im Rahmen der Weiterbildung, dass die Trennwand einen Graben in der Grundplatte in die beiden Ventilkammern aufteilt. Ebenso ist es denkbar, dass die beiden Ventilkammern in radialer Richtung geschachtelt, also koaxial zueinander angeordnet sind, wobei die Trennwand in diesem Fall vorzugsweise ringförmig, insbesondere kreisringförmig, konturiert ist.

Wie anfangs erwähnt, arbeitet das Mikroventil in der einfachsten Ausführungsform in beide Druckrichtungen - zum Öffnen des Mikroventils ist es ist lediglich notwendig, dass der Druck in einer der beiden Ventilkammern den Druck in der Referenzkammer übersteigt. Um diesen Wirkmechanismus auf nur eine Öffnungsrichtung zu begrenzen, insbesondere um das Mikroventil als Auslassventil auszubilden, das vorzugsweise nur bei einem Druckstoß in einer der beiden Ventilkammern öffnet, ist in Weiterbildung der Erfindung vorgesehen, die Membran so auszuformen oder mit mindestens einer Verstruktur zu versehen, dass das Mikroventil nur dann öffnet, wenn in einer bestimmten der beiden Ventilkammern ein Druckstoß auftritt und dadurch der Druck in der Referenzkammer überschritten wird, wohingegen das Mikroventil nicht öffnen soll, wenn ein Druckstoß in der anderen Ventilkammer zu verzeichnen ist. Gemäß dieser Ausführungsform wird ein in Bezug auf die Fluid-Flussrichtung gerichtetes Mikroventil erhalten. Insbesondere wird die Membran derart ausgeformt bzw. mit einer Verstärkungsstruktur versehen, dass die Flächenerstreckung der Membran bzw. des nicht verstärkten Bereichs der Membran asymmetrisch zwischen den Ventilkammern verteilt ist. Dies führt dazu, dass bei geeigneter Ausformung der Membran bzw. geeigneter Anordnung der Verstärkungsstruktur das Mikroventil im Wesentlichen nur in eine Richtung öffnet und zwar nur dann, wenn ein den Referenzdruck überschreitender Fluiddruck in der Ventilkammer auftritt, die von dem größten Flächenabschnitt der Membran bzw. des nicht verstärkten Bereichs der Membran begrenzt wird, da die Membran in dieser Ventilkammer die größte Druckangriffsfläche bildet. Wirkt dagegen in der anderen Ventilkammer, also in der Ventilkammer, die von dem kleineren Flächenabschnitt der Membran bzw. des nicht verstärkten Bereichs der Membran begrenzt wird, ein Druckstoß, so kann dieser Druckstoß von der Membran bzw. der Verstärkungsstruktur zumindest näherungsweise vollständig abgefedert werden. Geeignete Membranformen bzw. Konturen können mittels eines computergestützten Simulationsverfahrens errechnet und optimiert werden.

Damit das Mikroventil als Einlassventil eingesetzt werden kann, das Mikroventil also bei einem den Referenzdruck unterschreitenden Unterdruck in beispielsweise der zweiten Ventilkammer derart öffnet, dass Fluid aus der ersten Ventilkammer in die zweite Ventilkammer strömen kann, ist in erfindungsgemäß vorgesehen, dass beabstandet zu der Trennwand innerhalb der zweiten Ventilkammer ein Abstützelement, insbesondere eine Abstützwand, vorgesehen ist, auf der sich die Membran abstützen kann, so dass die Membran bei Unterdruck in der zweiten Ventilkammer von der Trennwand "weggehebelt" wird, wodurch die Verbindung zwischen den Ventilkammern geöffnet wird und Fluid von der ersten Ventilkammer in die zweite Ventilkammer strömen kann. Bevorzugt hat das Abstützelement zumindest näherungsweise die gleiche Höhe wie die Trennwand.

In Ausgestaltung der Erfindung ist mit Vorteil vorgesehen, dass das Abstützelement zwei Stützwände aufweist, die seitlich einer Durchgangsöffnung angeordnet sind. Anders ausgedrückt unterteilen die Stützwände die zweite Ventilkammer in zwei über die
Durchgangsöffnung miteinander verbundene Teilventilkammern, wobei eine Teilventilkammer zwischen der Trennwand und den Stützwänden und die andere Teilventilkammer, vorzugsweise die größere Teilventilkammer nur von der Stützwand und nicht von der Trennwand begrenzt wird. Die gewünschte Funktion kann beispielsweise durch geeignete Verstärkungsstrukturen auf der Membran, welche die Hebelwirkung unterstützen, ergänzt werden.

Bevorzugt ist eine Ausführungsform des Mikroventils, bei der die erste und die zweite Ventilkammer in einer Grundplatte, insbesondere aus Halbleitermaterial eingebracht sind und bei der das Schließglied in einer Funktionsschicht gebildet ist, wobei die Funktionsschicht vorzugsweise aus Borosilikatglas oder aus PDMS besteht. Die Funktionsschicht und die Grundplatte werden, vorzugsweise nach deren getrennter Strukturierung, aneinander gefügt, insbesondere durch anodisches oder plasmaaktives Bonden. Für den Fall, dass in der Grundplatte eine Trennwand zwischen den Ventilkammern vorgesehen wird, die die beiden Ventilkammern voneinander trennt, ist eine Ausführungsform bevorzugt, bei der die Trennwand an ihrer Stirnseite und/oder die Membran an ihrer Unterseite mit einer Antibondschicht versehen ist, um ein Anhaften der Membran an der Trennwand beim Bonden zu verhindern.

Wie eingangs erwähnt, betrifft die Erfindung neben dem Mikroventil als solchem auch ein Verfahren zum Herstellen des Mikroventils, wobei das Mikroventil eine Grundplatte sowie eine Funktionsschicht umfasst, die aneinander gefügt werden. Dabei liegt es im Rahmen der Erfindung, zunächst die Grundplatte sowie die Funktionsschicht zu strukturieren und drauffolgend aneinander festzulegen. Ebenso liegt es im Rahmen der Erfindung, zunächst lediglich die Grundplatte zu strukturieren, daraufhin die Funktionsschicht an diese zu fügen und daraufhin die Funktionsschicht zu strukturieren, wobei zum Strukturieren der Grundplatte und/oder der Funktionsschicht bevorzugt mikromechanische Methoden, wie Trench-Ätzen, eingesetzt werden. Zusätzlich oder alternativ ist es denkbar, dass die Grundplatte und/oder die Funktionsschicht durch Spritzgießen und/oder Heißprägen hergestellt werden. Ebenso können die erhabenen Strukturen der Grundplatte und/oder Funktionsschicht auch durch additive Prozesse, wie beispielsweise das Aufbringen und Strukturieren eines geeigneten Lackes wie SU-8 gefertigt werden. Daneben ist das Fügen der Funktionsschicht und der Grundplatte mittels Klebstoff denkbar, wobei der Klebstoff bevorzugt derart aufzubringen ist, dass das Schließglied in seinem Dichtbereich frei verstellbar ist.

Beim Fügen der Funktionsschicht und der Grundplatte ist darauf zu achten, dass das Schließglied, zumindest in seinem aktiven Dichtbereich, nicht an der Grundplatte, insbesondere an einer Trennwand der Grundplatte, anhaftet und dass das Schließglied und/oder die Grundplatte, zumindest abschnittsweise, mit einer Antibondschicht versehen werden.

Weiterhin führt die Erfindung auf eine Mikropumpe mit mindestens einem zuvor beschriebenen Mikroventil. Vorzugsweise umfasst die Mikropumpe zumindest zwei Mikroventile, von denen eines als Einlassventil und das andere als Auslassventil ausgebildet ist. Die Mikropumpe umfasst in einer bevorzugten Ausführungsform eine Pumpkammer, die die zweite Kammer des Einlassventils und die erste Kammer des Auslassventils bildet.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1a:: eine schematische Darstellung eines Ausschnitts einer Grundplatte eines Mikroventils, wobei in der Grundplatte zwei durch eine Trennwand voneinander getrennte Ventilkammern eingebracht sind,
- Fig. 1b:: ein aus einer Grundplatte gemäß Fig. 1a und einer Fügeschicht gebildetes Mikroventil,
- Fig. 2a bis Fig. 2c:: schematische Darstellungen unterschiedlicher Schaltzustände des in Fig. 1b gezeigten Mikroventils,
- Fig. 3:: eine schematische Darstellung eines als Auslassventil ausgebildeten Mikroventils,
- Fig. 4a und Fig. 4b:: in einer schematischen Darstellung unterschiedliche Schaltzustände des Mikroventils gemäß Fig. 3,
- Fig. 5a bis Fig. 5d:: unterschiedliche Schließgliedausformungen,
- Fig. 6:: eine mögliche Ausführungsform eines Mikroventils mit radial ineinander geschachtelten Ventilkammern,
- Fig. 7a:: in einer schematischen Darstellung eine abgewandelte Grundplatte für ein als Einlassventil ausgebildetes Mikroventil mit einem Abstützelement für das Schließglied,
- Fig. 7b:: ein als Einlassventil ausgebildetes Mikroventil unter Verwendung der Grundplatte gemäß Fig. 7a,
- Fig. 8a und Fig. 8b:: unterschiedliche Schaltzustände des Mikroventilsgemäß Fig. 7b und
- Fig. 9:: eine Mikropumpe mit dem in Fig. 7b gezeigten Einlassventil und dem in Fig. 3 gezeigten Auslassventil.

### Ausführungsformen der Erfindung

In den Figuren sind gleiche Bauteile und Bauteile mit der gleichen Funktion mit den gleichen Bezugszeichen gekennzeichnet.

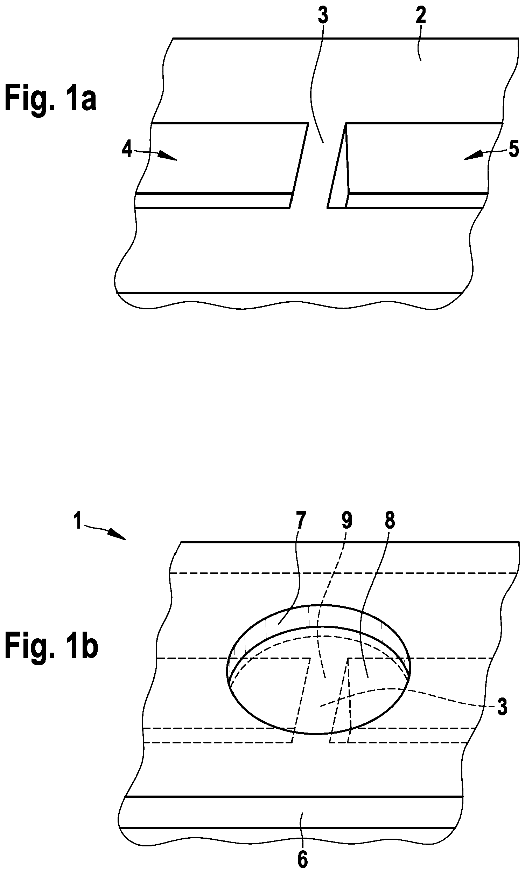

In den Fig. 1a und 1b ist der grundlegende Aufbau eines Mikroventils 1 gezeigt. In Fig. 1a ist eine Grundplatte 2 aus einem Halbleitermaterial gezeigt, in die ein von einer Trennwand 3 getrennter Kanal oder Graben eingebracht ist, wobei die sich ergebenden Kanalabschnitte eine erste und eine zweite Ventilkammer bilden. Die Trennwand 3 verläuft senkrecht zur Längserstreckung des Kanals.

Auf die Grundplatte 2 ist eine Funktionsschicht 6 gefügt, wobei in die Funktionsschicht 6 eine Referenzkammer 7 eingebracht ist, die an der in der Zeichnungsebene oberen Seite mit der Umgebung verbunden sein kann, oder die bevorzugt durch eine weitere Schicht (Platte) verschlossen ausgebildet sein kann. Der Boden der kreisringförmig konturierten Referenzkammer 7 wird gebildet von einem als elastische Membran ausgebildeten Schließglied 8, wobei das Schließglied sich über beide Ventilkammern 4, 5 erstreckt. Die Trennwand 3 befindet sich etwa mittig unterhalb des membranförmigen Schließgliedes 8. In einer Schließstellung liegt das Schließglied 8 auf einer Stirnseite 9 der Trennwand 3 auf und ist von dieser in einer Öffnungsstellung abgehoben, so dass ein Fluidaustausch zwischen den Ventilkammern 4, 5 stattfinden kann. In dem gezeigten Ausführungsbeispiel handelt es sich bei der Funktionsschicht 6 um eine Polymerplatte aus PDMS, in die die Referenzkammer 7 eingeprägt ist. Die Dicke des membranförmigen Schließgliedes 8 muss so gewählt werden, dass für die zur Anwendung kommenden Drücke eine geeignete Festigkeit bei ausreichender Flexibilität gegeben ist. Durch die Wahl des Druckes in der Referenzkammer 7 kann der Arbeitspunkt des Mikroventils 1 bestimmt werden. Bei Bedarf ist der Druck in der Referenzkammer 7 variabel. Dies kann beispielsweise dadurch realisiert werden, dass die Referenzkammer 7 an der dem Schließglied 8 gegenüberliegenden Seite mit einer Membran verschlossen ist, auf die ein Kolben, beispielsweise ein Piezoelement, wirkt, oder dadurch, dass die Referenzkammer an eine Druck- und/oder Vakuumbeaufschlagungsleitung angeschlossen ist.

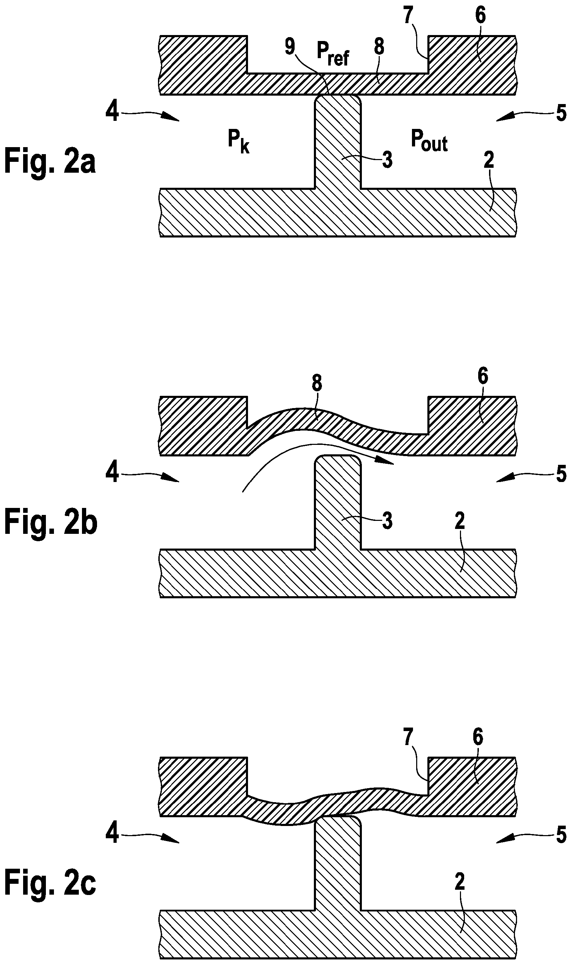

Anhand der Fig. 2a bis 2c wird im Folgenden die Funktionsweise des Mikroventils 1 gemäß Fig. 1b erläutert. Dabei wird davon ausgegangen, dass es sich bei der ersten Ventilkammer 4 um eine Pumpkammer einer Mikropumpe handelt. In Fig. 2a ist die Ruhelage des Mikroventils 1 gezeigt, in der das Schließglied 8 dichtend auf der Stirnseite 9 der Trennwand 3 aufliegt. In der ersten Ventilkammer 4 herrscht der Druck P_{K}, in der Referenzkammer 7 der Druck P_{Ref}, sowie in der zweiten Ventilkammer 5 der Druck Pₒᵤₜ. Kommt es nun in der als Pumpkammer dienenden ersten Ventilkammer 4 zu einem Druckstoß, so dass der Druck in der ersten Ventilkammer 4 den Referenzdruck in der Referenzkammer 7 überschreitet, hebt das flexible membranförmige Schließglied 8 von seinem von der Stirnseite der Trennwand 3 gebildeten Ventilsitz ab, so dass das Mikroventil 1 öffnet und Fluid aus der ersten Kammer 4 in die zweite Kammer 5 strömen kann. In Fig. 2c ist die Ansaugphase einer mit dem Mikroventil 1 ausgestatteten Mikropumpe gezeigt, in der der Druck in der ersten Ventilkammer 4 (stark) unter den Druck (Referenzdruck) in der Referenzkammer 7 abfällt. Das Schließglied 8 wird hierdurch an die Trennwand 3 angesaugt bzw. gegen diese gedrückt, wodurch die Abdichtung der beiden Ventilkammern 4, 5 verstärkt wird, also noch stärker ist als in dem in Fig. 2a dargestellten Ruhezustand. Wesentlich ist, dass die aktuierende Druckdifferenz des Mikroventils nicht das Druckgefälle zwischen den beiden Ventilkammern 4, 5, sondern die Druckdifferenz zwischen der ersten Ventilkammer 4 und der Referenzkammer 7 ist. Wie bereits zu Anfang erwähnt, kann durch die Wahl des Referenzdruckes in der Referenzkammer 7, vergleichbar mit der Vorspannung der Membran bei klassischen Mikroventilen, der Arbeitspunkt gewählt werden.

Der in den Fig. 2a bis 2c gezeigte Mechanismus wirkt in beide Richtungen, d.h. das Mikroventil 1 gemäß den Fig. 2a bis 2c würde auch dann öffnen, wenn es in der zweiten Ventilkammer 5 zu einem den Referenzdruck überschreitenden Druckstoß käme.

Um ein lediglich in einer Richtung wirkendes Mikroventil 1 zu erhalten, ist es möglich, das Schließglied 8 entsprechend zu formieren und/oder anzuordnen und/oder mit einer Verstärkungsstruktur zu versehen.

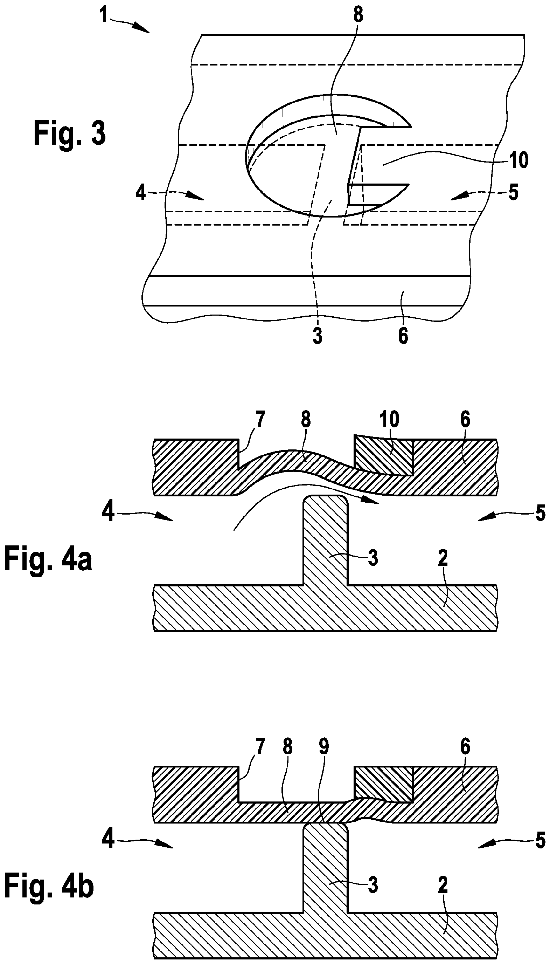

Ein derartiges Mikroventil 1 ist in Fig. 3 gezeigt. Das in Fig. 3 gezeigte Mikroventil 1 eignet sich insbesondere zur Verwendung als Auslassventil. Zu erkennen ist die asymmetrische Struktur des membranförmigen Schließgliedes 8. Das eigentliche, membranförmige Schließglied 8 bedeckt mit einem größeren Flächenabschnitt die erste Ventilkammer 4, als die zweite Ventilkammer 5. Gemäß einer ersten Alternative wurde das Schließglied 8 unmittelbar in der gezeigten Form hergestellt, insbesondere geätzt oder geprägt. Gemäß einer zweiten Alternative wurde das Schließglied 8 zunächst in einer in Fig. 3 gezeigten, kreisringförmigen Struktur hergestellt, woraufhin die Verstärkungsstruktur 10, insbesondere aus Funktionsschichtmaterial aufgebracht ist. Alternativ besteht die Verstärkungsstruktur 10 aus von dem Material der Funktionsschicht 6 unterschiedlichem Material. Durch die asymmetrische Ausbildung und Anordnung des Schließgliedes 8 öffnet sich das Mikroventil 1 bzw. hebt das Schließglied 8 nur von der Trennwand 3 ab, wenn es zu einem Druckstoß in der ersten Ventilkammer 4 kommt. Hierbei wirkt sich die Verstärkungsstruktur 10 nahezu nicht aus. Kommt es dagegen zu einem Druckstoß in der zweiten Ventilkammer 5, wird dieser Druckstoß aufgrund der Verstärkungsstruktur 10 bzw. aufgrund der asymmetrischen Ausformung und Anordnung des Schließgliedes 8 weitgehend abgefedert, so dass in diesem Fall bevorzugt kein Flüssigkeitsaustausch von der zweiten Ventilkammer 5 in die erste Ventilkammer 4 resultiert.

Die Funktionsweise des in Fig. 3 gezeigten, als Auslassventil ausgebildeten Mikroventils 1 ist in den Fig. 4a und 4b im Detail dargestellt. Dabei ist in Fig. 4a eine Druckstoßsituation in der ersten Ventilkammer 4 gezeigt. Zu erkennen ist, dass das membranförmige Schließglied 8 von der Trennwand 3 abhebt und somit Fluid aus der ersten Ventilkammer 4 in die zweite Ventilkammer 5 strömen kann. Die Verstärkungsstruktur 10 wirkt sich hierbei kaum oder vernachlässigbar aus. Zu erkennen ist, dass in Fig. 4a und Fig. 4b die Verstärkungsstruktur 10 abgesetzt eingezeichnet ist, also aus einem anderen Material besteht als die Funktionsschicht 6. Bevorzugt ist jedoch eine Ausführungsform, bei der die Verstärkungsstruktur 10 von einem nicht oder weniger stark abgetragenen Abschnitt der Funktionsschicht 6 gebildet wird.

In Fig. 4b ist der Fall eines Druckstoßes in der zweiten Ventilkammer 5 gezeigt. Zu erkennen ist, dass dieser Druckstoß, obwohl der Druck in der zweiten Ventilkammer 5 dabei den Referenzdruck in der Referenzkammer 7 überschreitet, nicht zu einem Abheben des Schließgliedes 8 von der Stirnseite 9 der Trennwand 3 führt. Dies ist auf die kleinere Druckangriffsfläche des Schließgliedes 8 oberhalb der zweiten Ventilkammer 5 zurückzuführen.

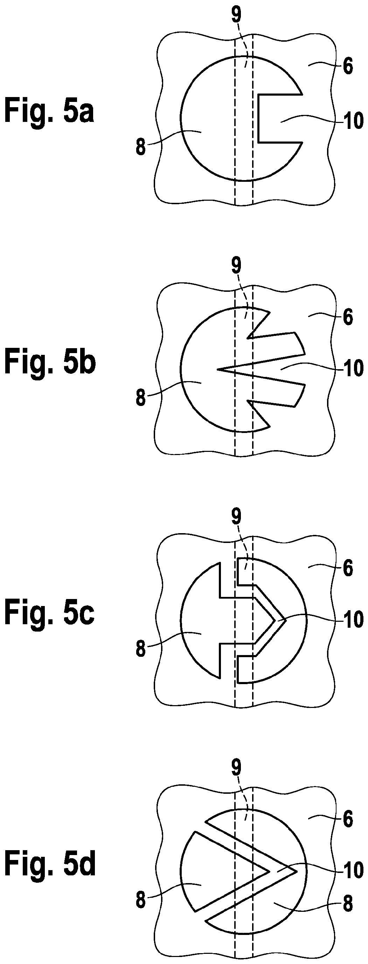

In den Fig. 5a bis 5d sind mögliche Ausformungen des membranförmigen Schließgliedes 8 gezeigt. Der jeweils von der Funktionsschicht 6 gebildete Verstärkungsbereich ist mit dem Bezugszeichen 10 gekennzeichnet. Zur Orientierungshilfe ist der Verlauf der Stirnseite 9 der Trennwand 3 eingezeichnet. Wie aus den Fig. 5c und 5d ersichtlich ist, kann das Schließglied 8 durch eine geeignete Anordnung der Verstärkungsstruktur 10 auch zweigeteilt ausgeführt werden. Daneben ist auch eine dreiteilige, etc. Ausbildung des Schließgliedes 8 denkbar.

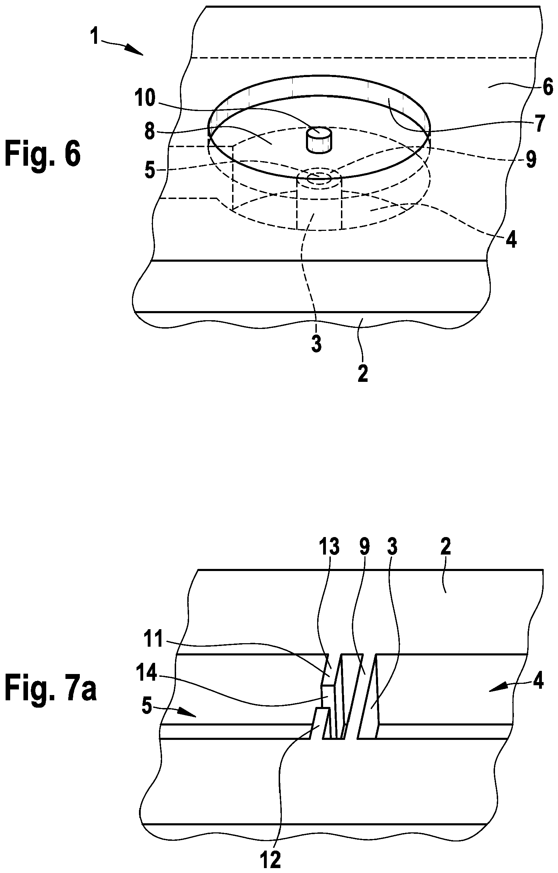

In Fig. 6 ist zu erkennen, dass mit der zweiteiligen Fertigungstechnik des Dreikammerventils auch klassische Ventilstrukturen ausgebildet werden können, wobei die sich ergebenden Mikroventile 1 eine Referenzkammer 7 umfassen, die sich in diesem Ausführungsbeispiel über die gesamte Flächenerstreckung beider Ventilkammern 4, 5 erstreckt. Die zweite Ventilkammer 5 ist in dem gezeigten Ausführungsbeispiel radial innerhalb der ersten Ventilkammer 4 angeordnet und wird von einer kreisringförmigen Trennwand 3 umschlossen. Das kreisringförmig konturierte Schließglied 8 ist in seinem zentrischen Bereich oberhalb der zweiten Ventilkammer 5 mit einer Verstärkungsstruktur 10 versehen, die gewährleistet, dass das Mikroventil 1 gemäß Fig. 6 nur von der ersten Ventilkammer 4 in Richtung der zweiten Ventilkammer 5 öffnet und somit als Auslassventil für eine Pumpkammer einer Mikropumpe dienen kann, wobei die Pumpkammer in der linken Zeichnungshälfte gemäß Fig. 6 in die kreisringförmig konturierte zweite Ventilkammer 5 einmündet.

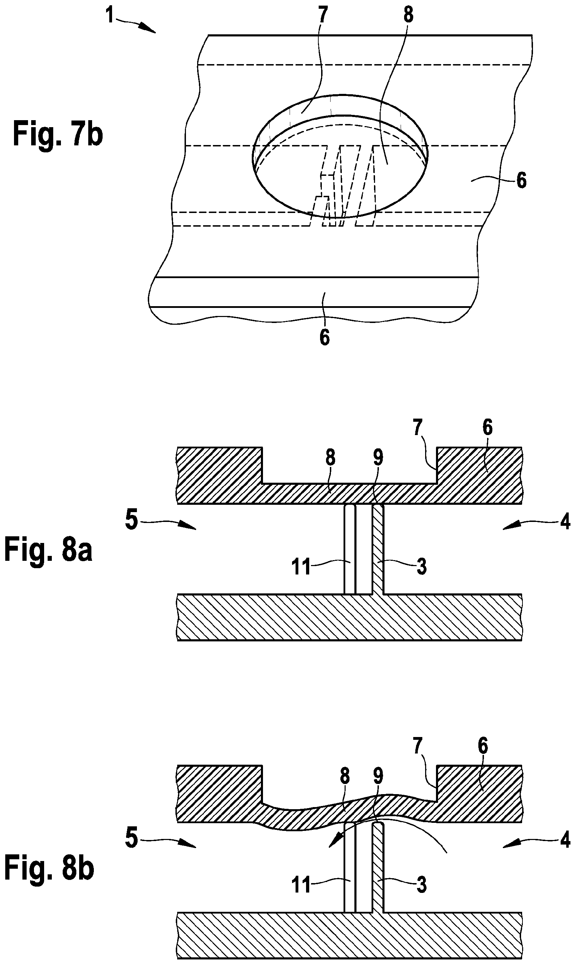

In Fig. 7a ist eine Grundplatte 2 eines in Fig. 7b schematisch dargestellten, als Einlassventil ausgebildeten Mikroventils 1 gezeigt. In der Darstellung sind die Ventilkammern 4, 5 gegenüber den vorherigen Figuren vertauscht angeordnet. Die erste Ventilkammer 4 befindet sich in der rechten Zeichnungshälfte, wohingegen die zweite Ventilkammer 5 in der linken Zeichnungshälfte angeordnet ist. Ein in der Grundplatte 2 eingebrachte Kanal wird unterbrochen von einer Trennwand 3 mit einer oberen freien Stirnseite 9. In der Zeichnungsebene links von der Trennwand 3 ist ein zweiteiliges Abstützelement 11 vorgesehen, welches zwei beabstandete Stützwände 12, 13 aufweist, die eine zentrale Durchgangsöffnung 14 seitlich begrenzen. Durch das Abstützelement 11 wird die zweite Ventilkammer 5 in zwei Teilkammern unterteilt.

In Fig. 7b ist das fertige, als Einlassventil ausgebildete Mikroventil 1 gezeigt. Zu erkennen ist, dass sich das Abstützelement etwa mittig bezogen auf die Flächenerstreckung des membranförmigen Schließgliedes 8 unterhalb des Schließgliedes 8 befindet.

Die Funktionsweise des Mikroventils 1 gemäß Fig. 7b ist in den Fig. 8a und 8b im Detail gezeigt. In Fig. 8a ist die Ruhelage bei Druckausgleich dargestellt. Dabei entspricht der Referenzdruck innerhalb der Referenzkammer 7 zumindest näherungsweise dem Druck in der ersten sowie der zweiten Ventilkammer 4, 5. Die Stützwände 12, 13 des Abstützelements 11 haben zumindest näherungsweise die gleiche Höhenerstreckung wie die Trennwand 3, so dass sich das Schließglied 8 in dieser Ruheposition sowohl auf dem Abstützelement 11 als auch auf der Trennwand 3 abstützt.

In Fig. 8b ist eine Schaltsituation gezeigt, in der es in der als Pumpkammer ausgebildeten zweiten Ventilkammer 5 zu einem Unterdruck kommt, der Druck in der zweiten Ventilkammer 5 also unter den Referenzdruck absinkt. Hierdurch wird das membranförmige Schließglied 8 in die zweite Ventilkammer 5 hineingesaugt. Durch die außermittige Anordnung der Trennwand 3 und des Vorsehens des Abstützelementes 11 wird das Schließglied 8 von der Stirnseite 9 der Trennwand 3 weggehebelt, so dass Fluid aus der ersten Ventilkammer 4 in die als Pumpkammer dienende zweite Ventilkammer 5 einströmen kann. Wäre die Hebelwirkung aufgrund des Abstützelementes 11 nicht vorgesehen, würde das Mikroventil 1 bei Unterdruck in der zweiten Ventilkammer 5 nicht öffnen, sondern noch dichter an die Trennwand 3 angesaugt bzw. angedrückt werden. Zusätzlich zu dem Vorsehen des Abstützelementes 11 kann das Schließglied 8 selbstverständlich durch Verstärkungsstrukturen 10 modifiziert und für die entsprechende Anwendung optimiert werden.

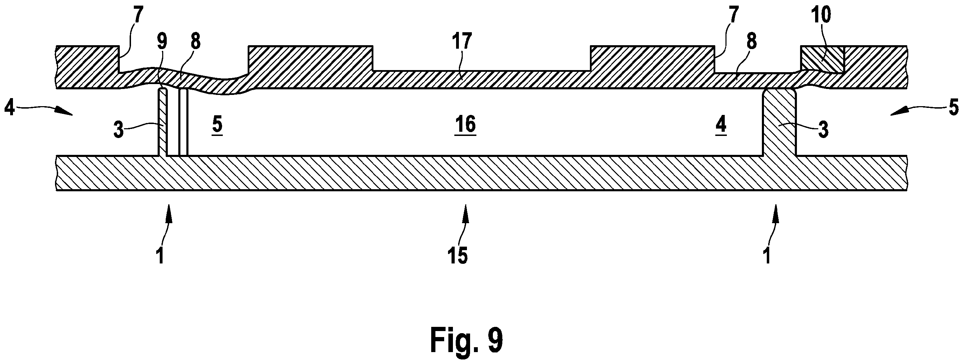

In Fig. 9 ist eine Mikropumpe 15 gezeigt. Die Mikropumpe 15 weist eine mit dem Bezugszeichen 16 gekennzeichnete Pumpkammer auf, wobei die Pumpkammer 16 die zweite Ventilkammer 5 eines als Einlassventil ausgebildeten, in der linken Zeichnungshälfte dargestellten Mikroventils 1 bildet und gleichzeitig die erste Ventilkammer 4 eines in der rechten Zeichnungshälfte dargestellten, als Auslassventil ausgebildetes Mikroventils 1. Die grundsätzliche Funktionsweise der Mikroventile 1 (Einlass- und Auslassventil) wurde bereits anhand der vorherigen Figuren erläutert, so dass zur Vermeidung von Wiederholungen diesbezüglich auf die vorherige Figurenbeschreibung verwiesen wird.

Die Pumpkammer 16 ist mit einer Pumpmembran 17 ausgestattet, die mittels eines Aktuators (nicht gezeigt) in die Pumpkammer 16 hinein sowie aus dieser heraus verfahrbar ist. Während der Ansaugphase der Mikropumpe 15, also bei aus der Pumpkammer 16 in der Zeichnungsebene nach oben herausbewegter Pumpmembran 17, wird das Schließglied 8 des als Einlassventil ausgebildeten Mikroventils 1 von der Trennwand 3 bzw. ihrer Stirnseite 9 weggehebelt (dargestellt), so dass Fluid aus der ersten Ventilkammer 4 des Mikroventils 1 in die Pumpkammer 16 strömen kann. In der Druckphase, also bei in die Pumpkammer 16 hineinbewegter Pumpmembran 17, wird das membranförmige Schließglied 8 des als Auslassventil ausgebildeten Mikroventils von der Trennwand 3 abgehoben, so dass Fluid aus der Pumpkammer 16 in die zweite Ventilkammer 5 des Mikroventils 1 abströmen kann. Zu erkennen ist die Verstärkungsstruktur 10 des als Auslassventil ausgebildeten Mikroventils 1 in der rechten Zeichnungshälfte. Während dieser Druckphase wird ein Öffnen des als Einlassventil ausgebildeten Mikroventils 1 (linke Zeichnungshälfte) durch den schlechteren Hebel des Schließgliedes 8 durch eine geeignete Auslegung nicht geöffnet. Zusätzlich kann das Schließglied 8 des als Einlassventil dienenden Mikroventils 1 in seinem in der Zeichnungsebene rechten Bereich mit einer geeigneten Verstärkungsstruktur 10 versehen werden.

## Patentansprüche

1. Mikroventil, umfassend eine erste Ventilkammer (4) und eine zweite Ventilkammer (5) sowie ein Schließglied (8), das zwischen einer Öffnungsstellung, in der die Ventilkammern (4, 5) miteinander verbunden sind und einer Schließstellung, in der die Ventilkammern (4, 5) voneinander getrennt sind, verstellbar ist,
wobei eine Referenzkammer (7) vorgesehen ist, die von dem Schließglied (8) begrenzt ist, wobei das Schließglied (8) als Membran ausgebildet ist, die in der Schließstellung dichtend mit einer die erste und die zweite Ventilkammer (4, 5) voneinander trennenden Trennwand (3), insbesondere deren Stirnseite (9), zusammenwirkend angeordnet und/oder ausgebildet ist,
**dadurch gekennzeichnet, dass**
beabstandet zu der Trennwand (3) in der zweiten Ventilkammer (5), vorzugsweise im Bereich der Membranmitte, ein Abstützelement (11) zum Abstützen der Membran vorgesehen ist, um eine Verbindung zwischen den Ventilkammern (4, 5) bei mit Unterdruck beaufschlagter zweiter Ventilkammer (5) herzustellen.

2. Mikroventil nach Anspruch 1,
**dadurch gekennzeichnet,**
**dass** der Druck in der Referenzkammer (7), insbesondere unabhängig von dem Druck in der ersten und/oder zweiten Ventilkammer (4, 5), einstellbar ist.

3. Mikroventil nach einem der Ansprüche 1 oder 2,
**dadurch gekennzeichnet,**
**dass** die Referenzkammer (7) mit der ersten oder der zweiten Ventilkammer (4, 5) verbunden ist.

4. Mikroventil nach einem der vorhergehenden Ansprüche,
**dadurch gekennzeichnet,**
**dass** das Schließglied (8) derart ausgeformt und/oder mit mindestens einer Verstärkungsstruktur (10) versehen ist, dass das Öffnungsverhalten des Mikroventils (1) abhängig von der Richtung des Druckgefälles zwischen den beiden Ventilkammern (4, 5) ist.

5. Mikroventil nach Anspruch 1,
**dadurch gekennzeichnet,**
**dass** das Abstützelement (11) beidseitig einer Durchgangsöffnung (14) angeordnete Stützwände (12, 13) aufweist.

6. Mikroventil nach einem der vorhergehenden Ansprüche,
**dadurch gekennzeichnet,**
**dass** die erste und die zweite Ventilkammer (4, 5) in einer Grundplatte (2), insbesondere aus einem Halbleitermaterial, angeordnet sind, und dass das Schließglied (8) in einer darüber oder darunter liegenden Funktionsschicht (6), insbesondere aus einem Polymermaterial, ausgebildet ist.

7. Mikroventil nach Anspruch 6,
**dadurch gekennzeichnet,**
**dass** die Funktionsschicht (6) mit der Grundplatte (2) gefügt ist, insbesondere durch anodisches oder plasmaaktives Bonden.

8. Mikropumpe mit mindestens einem als Einlassventil ausgebildeten Mikroventil (1) nach einem der Ansprüche 1 bis 7 und/oder mit mindestens einem als Auslassventil ausgebildeten Mikroventil (1) nach einem der Ansprüche 1 bis 7.

## Claims

1. Micro valve, comprising a first valve chamber (4) and a second valve chamber (5) and also a closing member (8), which is adjustable between an open position, in which the valve chambers (4, 5) are connected to each other, and a closed position, in which the valve chambers (4, 5) are separated from each other,
a reference chamber (7), which is delimited by the closing member (8), being provided, the closing member (8) being formed as a diaphragm, which in the closed position is arranged and/or formed so as to act together in a sealing manner with a separating wall (3) that separates the first and second valve chambers (4, 5) from each other, in particular with the end face (9) thereof,
**characterized in that**
a supporting element (11) for supporting the diaphragm is provided at a distance from the separating wall (3) in the second valve chamber (5), preferably in the region of the middle of the diaphragm, in order to establish a connection between the valve chambers (4, 5) when negative pressure is applied to the second valve chamber (5).

2. Micro valve according to Claim 1,
**characterized**
**in that** the pressure in the reference chamber (7) can be set, in particular independently of the pressure in the first and/or second valve chambers (4, 5).

3. Micro valve according to either of Claims 1 and 2,
**characterized**
**in that** the reference chamber (7) is connected to the first or second valve chamber (4, 5).

4. Micro valve according to one of the preceding claims,
**characterized**
**in that** the closing member (8) is designed in such a way and/or provided with at least one reinforcing structure (10) in such a way that the opening behaviour of the micro valve (1) is dependent on the direction of the pressure gradient between the two valve chambers (4, 5).

5. Micro valve according to Claim 1,
**characterized**
**in that** the supporting element (11) has supporting walls (12, 13) arranged on both sides of a through-opening (14).

6. Micro valve according to one of the preceding claims,
**characterized**
**in that** the first and second valve chambers (4, 5) are arranged in a base plate (2), in particular of a semiconductor material, and in that the closing member (8) is formed in a functional layer (6), in particular of a polymer material, lying thereover or thereunder.

7. Micro valve according to Claim 6,
**characterized**
**in that** the functional layer (6) is joined to the base plate (2), in particular by anodic or plasma-active bonding.

8. Micro pump with at least one micro valve (1) formed as an inlet valve according to one of Claims 1 to 7 and/or with at least one micro valve (1) formed as an outlet valve according to one of Claims 1 to 7.

## Revendications

1. Micro-valve, comprenant une première chambre de valve (4) et une deuxième chambre de valve (5) ainsi qu'un organe de fermeture (8) qui peut être déplacé entre une position d'ouverture dans laquelle les chambres de valve (4, 5) sont connectées l'une à l'autre et une position de fermeture dans laquelle les chambres de valve (4, 5) sont séparées l'une de l'autre,
une chambre de référence (7) étant prévue, laquelle est limitée par l'organe de fermeture (8), l'organe de fermeture (8) étant réalisé en tant que membrane qui, dans la position de fermeture, est disposée et/ou réalisée de manière à coopérer en réalisant l'étanchéité avec une paroi de séparation (3), en particulier son côté frontal (9), séparant la première et la deuxième chambre de valve (4, 5) l'une de l'autre, **caractérisée en ce**
**qu'**un élément de support (11) destiné à supporter la membrane est prévu à distance de la paroi de séparation (3) dans la deuxième chambre de valve (5), de préférence dans la région du centre de la membrane, afin d'établir une connexion entre les chambres de valve (4, 5) lorsque la deuxième chambre de valve (5) est sollicitée avec une dépression.

2. Micro-valve selon la revendication 1,
**caractérisée en ce que**
la pression dans la chambre de référence (7) peut être ajustée, notamment indépendamment de la pression dans la première et/ou la deuxième chambre de valve (4, 5).

3. Micro-valve selon l'une quelconque des revendications 1 ou 2,
**caractérisée en ce que**
la chambre de référence (7) est connectée à la première ou à la deuxième chambre de soupape (4, 5).

4. Micro-valve selon l'une quelconque des revendications précédentes,
**caractérisée en ce que**
l'organe de fermeture (8) est formé et/ou est pourvu d'au moins une structure de renforcement (10) de telle sorte que le comportement d'ouverture de la micro-valve (1) soit dépendant du sens du gradient de pression entre les deux chambres de valve (4, 5).

5. Micro-valve selon la revendication 1,
**caractérisée en ce que**
l'élément de support (11) présente des parois de support (12, 13) disposées de chaque côté d'une ouverture de passage (14).

6. Micro-valve selon l'une quelconque des revendications précédentes,
**caractérisée en ce que**
la première et la deuxième chambre de valve (4, 5) sont disposées dans une plaque de base (2), en particulier constituée d'un matériau semi-conducteur, et **en ce que** l'organe de fermeture (8) est réalisé dans une couche fonctionnelle (6) située au-dessus ou en dessous, en particulier en matériau polymère.

7. Micro-valve selon la revendication 6,
**caractérisée en ce que**
la couche fonctionnelle (6) est assemblée à la plaque de base (2), en particulier par liaison anodique ou à activation plasmatique.

8. Micropompe comprenant au moins une micro-valve (1) selon l'une quelconque des revendications 1 à 7 réalisée en tant que valve d'entrée et/ou comprenant au moins une micro-valve (1) réalisée en tant que valve de sortie selon l'une quelconque des revendications 1 à 7.
